# EUROPÄISCHE PATENTSCHRIFT

(11) **EP 0 540 779 B1**
(45) Veröffentlichungstag und Bekanntmachung des Hinweises auf die Patenterteilung: **02.03.1994**
(21) Anmeldenummer: 91119075.9
(22) Anmeldetag: 08.11.1991
(51) Int. Cl.: F16L 17/035

(54) **Dichteinsatz**
Sealing insert
Garniture d'étanchéité

(43) Veröffentlichungstag der Anmeldung: 12.05.1993
(73) Patentinhaber: WOCO Franz-Josef Wolf & Co., D-63628 Bad Soden-Salmünster (DE)
(72) Erfinder: Wolf, Franz Josef, W-6483 Bad Soden-Salmünster (DE); Lauer, Hansjörg, W-6483 Bad Soden-Salmünster (DE)
(74) Vertreter: Jaeger, Klaus, Dr.

(56) Entgegenhaltungen:
- DE-A- 3 822 159
- FR-A- 2 347 601
- GB-A- 1 080 816

## Beschreibung

Die Erfindung betrifft einen Dichteinsatz aus gummielastischem Werkstoff für die Muffe einer ringgedichteten Rohrsteckverbindung zwischen einer Muffe und einem Spitzende, insbesondere von Rohren aus mineralischen Werkstoffen, speziell für Rohre aus gebranntem Ton.

Ein permanentes Problem bei Steckverbindungen dieser Art, insbesondere bei Steckverbindungen zwischen Rohren aus mineralischen Werkstoffen, speziell bei Rohren aus gebranntem Ton, sogenanntem "Steinzeug", ist die herstellungsbedingte große Toleranz der Dichtspaltbreite. Im Bereich der oberen Grenze des Toleranzbereiches muß der Dichtring ausreichende Verformungs- und/oder Verpressungsreserven aufweisen, um noch die erforderliche Dichtkraft aufzubringen. Im unteren Grenzbereich der Dichtspaltbreitentoleranz muß der Dichtring dagegen ausreichend verformbar und/oder fixiert sein, um beim Einschieben des Spitzendes weder beschädigt noch aus seiner Soll-Lage herausgeschoben zu werden.

Ein Dichteinsatz aus gummielastischem Werkstoff für die Muffe solcher ringgedichteten Rohrsteckverbindungen ist aus der deutschen Patentschrift DE 34 46 559 C2 bekannt. Durch einen verschwenkbar an einem Haltering angeformten Doppellippendichtring mit zumindest im wesentlichen V-förmig zueinanderstehenden Dichtlippen, die auf dem Außenmantel eines eingeschobenen Spitzendes aufgespreizt werden, wird ein hohes Maß an Elastizität des Dichtringes erzielt, die nicht auf Kosten der Dichtkraft geht. So ist einerseits die Rückstellkraft der auf der Außenwand des eingeschobenen Spitzendes radial dehnend gespreizten Dichtlippen nicht in dem Maße von einer unterstützenden radial wirkenden Verpressung des Dichtringes abhängig und ist der verschwenkbare Doppellippendichtring durch einen radial auswärts im Basisbereich oder Wurzelbereich, aus dem das Dichtlippenringpaar entspringt, ausgeformten zusätzlichen Wulstring beim Einschieben des Spitzendes durch den Doppellippenring hindurch axial unterstützend verriegelbar.

Die Baustellenpraxis hat jedoch gezeigt, daß beide Maßnahmen im Bereich extremer Randbedingungen, die aus Sicherheitsgründen immer einzukalkulieren sind, nicht vollständig ausreichen, um funktionell eine auch unter solchen Extrembedingungen sichere Dichtheit der Steckverbindung zu gewährleisten.

Unterliegt die Steckverbindung beispielsweise auf dem in die Muffe eingeschobenen Spitzendenscheibe einer großen Scheitellastdifferenz relativ zur Muffe, beispielsweise durch Erdversetzungen bei erdverlegten Rohrsystemen, ist nicht vollständig auszuschließen, daß durch eine Zugverformung im Sohlenbereich der Steckverbindung der Doppellippenring seine Spreizspannung auf der Außenwand des Spitzendes im Scheitel der Steckverbindung so weit einbüßt, daß ein auf die Doppellippendichtung wirkender Innendruck im Scheitelbereich die nach axial innen weisende Dichtlippe auf der Außenwand des Spitzendes nach axial auswärts (stets bezogen auf die Muffe der Steckverbindung) umschlägt, und durch die nun beide gleichsinnig nach axial auswärts weisenden Dichtlippen eine Dichtheit gegenüber dem Innendruck in der Rohrleitung nicht mehr ausreichend gegeben ist.

Außerdem sind bei dem Ring nach dem Stand der Technik im Bereich der oberen Grenze der fertigungsbedingten Toleranz der Dichtspaltbreite zwischen der Muffe und dem Spitzende die beim Einschieben des Spitzendes, insbesondere bei nicht exakt zentrischem Einführen des Spitzendes, die auf den Doppellippenring einwirkenden axial einwärts gerichteten Zugkräfte größer als die durch den Wulstring am Doppellippenring bewirkte axiale Bremsung und Fixierung des Dichtringes am Haltering. Zwar ließe sich diese Fixierung durch eine Vergrößerung des am Lippenring ausgebildeten Wulstringes verbessern, jedoch würden dadurch Spitzenden mit im Toleranzbereich großen Außendurchmessern, also Spitzenden, die im Toleranzbereich enge und engste Dichtspaltbreiten freilassen, durch die Bremswirkung verstärkter Wulstringe nicht mehr einführbar sein.

Im einzelnen weist der aus der deutschen Patentschrift DE 34 46 559 C2 bekannte Dichteinsatz ein Dichtlippenpaar auf, das mit einem über einen ringförmigen Basisbereich zu einem Doppellippendichtring miteinander verbunden ist. Dabei steht eine erste der beiden ringförmigen Dichtlippen dieses Dichtlippenpaares vor dem Einschieben des Spitzendes zumindest im wesentlichen axial zur Muffenöffnung, während die zweite dieser beiden Dichtlippen des Dichtlippenpaares sich zumindest im wesentlichen radial einwärts erstreckt. Hier wie insgesamt im Rahmen der vorliegenden Beschreibung soll dabei durch die Formulierung "zumindest im wesentlichen" im Zusammenhang mit einer Bemessungsangabe oder mit der Angabe einer Ausrichtung darauf hingewiesen werden, daß die angegebenen Bemessungen oder Ausrichtungen von Teilen oder Abschnitten des Dichteinsatzes Soll-Werte mit vergleichsweise großen zulässigen Toleranzen bezeichnen, durch die das Wesen der Erfindung weder verändert noch die angestrebte Wirkung der Erfindung in Frage gestellt sind. Wenn also beispielsweise von der axial innenliegenden Ringlippe des Doppellippendichtringes ausgesagt ist, daß diese "zumindest im wesentlichen radial" ausgerichtet ist, so bedeutet dies primär, daß diese Lippe als Kreisringscheibe ausgebildet ist. Diese Bezeichnung soll jedoch nicht ausschließen, daß diese Lippe auch konische Oberflächen aufweisen kann und auch mit ihrer radialen Mittelebene durchaus als axial einwärts oder axial auswärts konvergierende Konusfläche ausgebildet sein kann. Dem Fachmann ist dabei ohne weiteres ersichtlich und bekannt, daß alle Gestaltungsvarianten dieser axial inneren Dichtlippe ohne weiteres ohne der im Toleranzrahmen durchaus exakten Bezeichnung "zumindest im wesentlichen radial ausgerichtet" benannt sind und bei allen dieser Stellungen in identischer Weise die gleiche Funktion erfüllen, nämlich den Doppellippenring beim Einschieben des Spitzendes, dessen Stirnseite auf diesen "zumindest im wesentlichen radial einwärts ausgerichteten" Dichtlippenring stößt, nach axial einwärts zu verschwenken.

Entsprechend ist die Angabe "zumindest im wesentlichen" auch an anderen Stellen der vorliegenden Beschreibung zu verstehen.

Bei dem nach dem Stand der Technik bekannten Dichteinsatz ist dieser Doppellippendichtring über einen flexiblen Anbindungsringabschnitt oder Verbindungsringabschnitt an einen Halteringabschnitt angebunden, der seinerseits fest mit der Innenwand der Muffe verbunden ist, sei es durch Verkleben, Vergießen oder Verspannen. Auf dem sich axial einwärts hülsenförmig erstreckenden Abschnitt dieses Halteringes ist eine sich nach axial einwärts verjüngende Konusfläche ausgebildet, auf der ein Wulstring gebremst und bestimmungsgemäß beim Einschieben des Spitzendes verkeilend axial fixiert wird, der dem Wurzelbereich der einander V-förmig gegenüberstehenden Dichtlippenringe des Doppellippenringes ausgebildet ist. Dabei ist, wie vorstehend bereits funktionell erläutert, diese Verriegelung durch axiale Verkeilung durchaus im mittleren Toleranzbereich wirksam, führt aber zu Problemen bei Dichtspaltbreiten, die deutlich oberhalb der Nennwerte liegen. Durch ein axiales Hinausschieben des Doppellippenwulstringes über die am Halteringabschnitt ausgebildete Konusfläche verliert der auf der Außenwand des Spitzendes aufgespreizte Doppellippenring seine radiale Stabilität und ergänzende Preßkraft. Selbst wenn der Lippenring auf der Außenwand des Spitzendes der Soll-Lage entsprechend aufspreizt bleibt, also mit einer axial einwärts und axial auswärts weisenden Dichtlippe, weisen solcherart aus ihrer Soll-Lage herausgezogene Dichtringe insbesondere bei Spitzenden mit im Toleranzbereich kleinen Außendurchmessern nicht mehr die erforderliche zuverlässige Dichtheit auf.

Ausgehend von diesem Stand der Technik liegt der Erfindung die Aufgabe zugrunde, den aus dem Stand der Technik bekannten Dichteinsatz funktionell dahingehend zu verbessern, daß eine Scheiteldichtheit der Steckverbindung auch bei großer Scheitellastdifferenz und im Toleranzbereich kleinem Außendurchmesser des Spitzendes gewährleistet ist und daß gleichzeitig im Bereich der im Toleranzbereich großen Dichtspaltbreiten auch beim Einschieben des Spitzendes zuverlässig verhindert ist, daß der flexibel an dem Haltering angebundene verschwenkbare Doppellippenring nicht vom Spitzende nach axial einwärts hinein aus seiner Soll-Lage herausgezogen und ggf. sogar über den Haltering hinaus gezogen zu werden.

Zur Lösung dieser Aufgabe schafft die Erfindung einen Dichteinsatz, der die im Patentanspruch 1 genannten Merkmale aufweist.

Während bei dem aus dem Stand der Technik bekannten Dichteinsatz dadurch beim Einschieben des Spitzendes eine axiale Bremsung und Fixierung des verschwenkbaren Doppellippendichtringes erzielt wird, daß ein nach radial außen vorspringender Wulstring am Basisbereich des Doppellippenringes auf eine Keil- oder Konusfläche des Halteringes aufgeschoben und aufgeklemmt wird, die vor einem zweiten Wulstring, der am Halteringabschnitt angeformt ist, ausgebildet ist, liegt demgegenüber das Wesen der Erfindung darin, die vor dem Einschieben des Spitzendes zumindest im wesentlichen radial stehende axial innenliegende zweite Dichtlippe des Dichtlippenringes auf der axial und radial innenliegenden Wand des Halteringabschnitts durch komplementär einander hintergreifende Dichtringe nicht zu verklemmen, sondern durch formschlüssigen Hintergriff axial zu verriegeln, und zwar nicht nur gegen eine axiale Verschiebung nach axial einwärts, sondern auch eine axiale Verriegelung gegen eine Verschiebung dieser Dichtlippe nach axial auswärts. Diese zusätzliche axiale Verriegelung der axial innenliegenden Dichtlippe gegen eine Dislokation nach axial auswärts bewirkt dabei sowohl eine wesentlich verbesserte Dichtheit des Dichtsystems auch bei großen Dichtspaltbreiten gegenüber Innendruck als auch eine verbesserte Lagefixierung gegen Zugkräfte, die insbesondere bei erdverlegten Rohrsystemen durch Versetzungen auf Rohrsteckverbindungen dieser Art einwirken können.

Im einzelnen ist der Dichteinsatz nach der Erfindung also durch einen dritten Wulstring gekennzeichnet, der an der vor dem Einschieben des Spitzendes axial einwärts weisenden Rückseite der zweiten Dichtlippe nach im entspannten Zustand zunächst einwärts vorspringend derart am radial innenliegenden Randbereich der zweiten Dichtlippe angeformt und ausgebildet ist, daß dieser (insgesamt dritte) Wulstring nach dem Einschieben des Spitzendes und nach dem Verschwenken des Doppellippenringes den am Haltering angeformten zweiten Wulstring axial innen bündig und formschlüssig hintergreift. In dieser Lage wird also der am Halteringabschnitt nach radial innen vorspringende Wulstring, der sogenannte "zweite Wulstring" sowohl muffenkragenseitig als auch muffenspiegelseitig sowohl vom ersten als auch vom dritten Wulstring des Dichteinsatzes, die beide auf der axial innenliegenden Rückwand der zweiten Dichtlippen ausgeformt sind, zumindest im wesentlichen formschlüssig "umgriffen". Dieser "Umgriff" ist dabei für Zugkräfte, die axial auswärts gerichtet auf den Doppellippenring einwirken, ein "Hintergriff" bezogen auf den am Rand der zweiten Dichtlippe ausgebildeten Wulstring und ist ein "Hintergriff" bei axial einwärts gerichtet auf den Doppellippenring einwirkenden Zugkräften bezogen auf den am Basisbereich des Doppellippenringes ausgeformten ersten Wulstring. Im ersten Fall wird ein nach außen Umschlagen der axial innenliegenden Dichtlippe auf der Außenwand eines dünnen Spitzendes ausgeschlossen, während im zweiten Fall ein Hinausziehen des Doppellippenringes nach axial einwärts über den unteren Rand des Halteringes hinaus verhindert ist.

Ausgestaltungen der Erfindung sind Gegenstand der Unteransprüche.

Eine wesentliche Ausgestaltung des dritten Wulstringes liegt dabei in seiner Bemessung relativ zur Dichtspaltbreite und der radialen Dicke des zweiten Wulstringes. Um eine solche gegen Innendruck formschlüssige Verriegelung der vor dem Einschieben des Spitzendes nach radial innen weisenden Dichtlippe gegen Innendruck zu erreichen, ist nach dieser Ausgestaltung der Erfindung vorgesehen, daß die nach dem Einschieben des Spitzendes und nach dem Verschwenken des Doppellippenringes radiale Gesamthöhe des dritten Wulstringes und der zweiten Dichtlippe, an der dieser Wulstring angeformt ist, im Bereich dieses dritten Wulstringes mindestens um den Faktor 1,5, insbesondere mindestens um den Faktor 2 größer ist als der radiale Abstand zwischen dem Innenrand des zweiten Wulstringes und der Außenwandfläche des Spitzendes bei koaxialer Ausrichtung des Spitzendes. Dabei ist dem Fachmann ohne weiteres erkennbar, daß er diese Formschlußfaktoren bei geeigneter Profilierung der Wulstringe, insbesondere als zusammenwirkende und komplementäre Konusflächen, vergrößern kann.

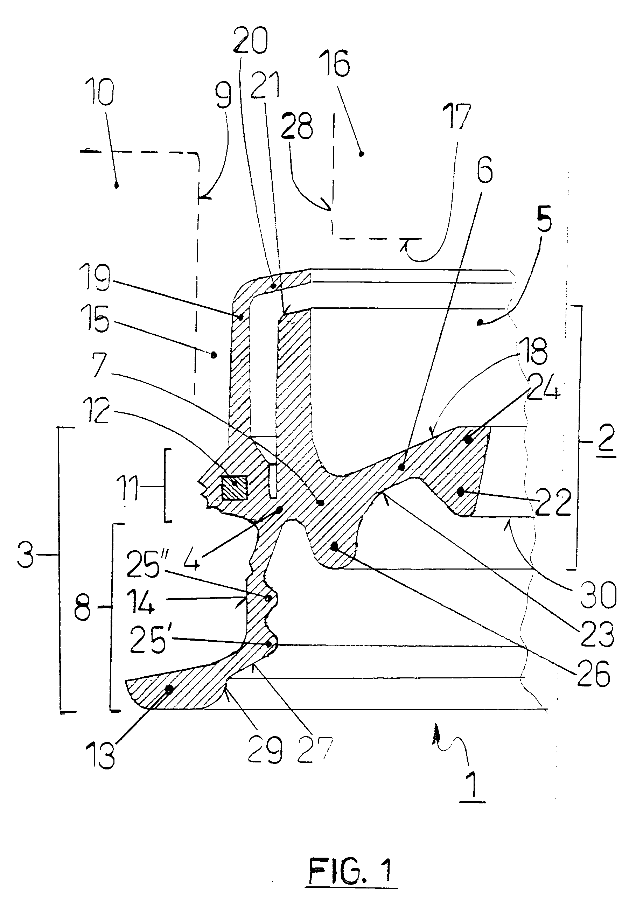

Die Erfindung ist im folgenden anhand eines Ausführungsbeispiels in Verbindung mit der Zeichnung näher erläutert. Dabei zeigt die einzige Figur, nämlich die
- Fig. 1: im axialen Schnurprofil ein Ausführungsbeispiel eines Dichteinsatzes, bei dem die Merkmale der Erfindung verwirklicht sind.

In der Fig. 1 ist im Axialschnitt das Schnurprofil eines Dichteinsatzes gezeigt, bei dem die Merkmale der Erfindung verwirklicht sind. Der Dichteinsatz 1 besteht aus einem Doppellippenring 2 und einem Haltering 3, die über einen flexiblen Anbindungsringabschnitt 4 miteinander verbunden sind.

Der Doppellippenring, der den eigentlichen Dichtring des Dichteinsatzes bildet, besteht aus einer ersten Dichtlippe 5, die in dem in Fig. 1 gezeigten unverformten Zustand vor dem Einschieben des Spitzendes zumindest im wesentlichen axial auswärts zur Muffenöffnung hin ausgerichtet ist, und aus einer zweiten Dichtlippe 6, die sich vor dem Einschieben des Spitzendes zumindest im wesentlichen nach radial einwärts erstreckt, sowie einem Basisbereich 7, der den verstärkten Wurzelbereich für die beiden zumindest im wesentlichen V-förmig gegeneinanderstehenden Dichtlippen 5,6 des Doppellippendichtringes 2 bildet.

In dem hier gezeigten Ausführungsbeispiel ist der Dichteinsatz zur Fixierung in der Rohrmuffe durch Vergießen ausgelegt. Zu diesem Zweck besteht der Haltering 3 aus einem Stützringabschnitt 8, der den Haltering muffenspiegelseitig an der Innenwand 9 der in Fig. 1 schematisch angedeuteten Muffe 10 abstützt, und aus einem Verankerungsring 11, der in dem hier gezeigten Ausführungsbeispiel durch eine Stahlringeinlage 12 verstärkt ist.

In der aus Fig. 1 ersichtlichen Weise ist der größte Außendurchmesser des Dichteinsatzes 1 am Fuß 13 des Stützringabschnitts 8 im unverformten und entspannten Zustand des Dichtringes deutlich größer als der auch im Fertigungstoleranzbereich größte lichte Innendurchmesser der Muffe 10. Dadurch liegt der Fußring 13 des Stützringabschnitts 8 des Dichteinsatzes 1 nach dem Einsetzen in die Muffe 10 unter Vorspannung an der Innenwand 9 der Muffe 10, vorzugsweise in einer separaten Aufnahmenut in der Innenwand 9 der Muffe 10, an, so daß zwischen der Innenwand 9 der Muffe 10 und der Außenwand 14 des Dichteinsatzes ein becherartiger, muffenkragenseitig offener und muffenspiegelseitig durch den Stützringabschnitt 8 des Halteringes 3 gegenüber der Muffeninnenwand 9 abgedichteter Ringraum 15 abgegrenzt ist, der im einsatzfertigen Einbauzustand mit einer üblichen Vergußmasse ausgefüllt ist.

In der ebenfalls aus Fig. 1 ersichtlichen Weise sind die beiden Dichtlippen 5,6 des Doppellippenringes 2 so bemessen, daß der lichte Innendurchmesser der axial auswärts weisenden ersten Dichtlippe 5 größer als der in einem Fertigungstoleranzbereich größte Außendurchmesser des in der Fig. 1 schematisch angedeuteten Spitzendes 16 ist, während gleichzeitig der größte lichte Innendurchmesser der zweiten, radial einwärts weisenden Dichtlippe 6 deutlich kleiner als der im Fertigungstoleranzbereich kleinste Außendurchmesser des Spitzendes 16 ist, so daß die Stirnringfläche 17 des Spitzendes 16 auch noch beim nicht koaxialen Einschieben und Hindurchschieben des Spitzendes 16 durch den Doppellippenring zuverlässig auf ihrem gesamten Umfang auf der axial auswärts weisenden Ringfläche 18 der zweiten Dichtlippe 6 aufsetzt und auf diese Weise den Doppellippenring 2 bestimmungsgemäß nach axial einwärts verschwenkt.

Der in der Fig. 1 gezeigte Dichteinsatz zeigt weiterhin eine zwischen der axial auswärts weisenden Dichtlippe 5 und der Innenwand 9 der Rohrmuffe 10 zumindest im wesentlichen zu der axial auswärts weisenden Dichtlippe 5 koaxial ausgerichtete und am Haltering 3, hier speziell am Verankerungsring 11, angeformte und zumindest im wesentlichen zylindrische Manschette 19. Diese zylindrische Manschette 19 läuft muffenkragenseitig in einen kreisringförmigen Innenflansch 20 aus, der die zum Muffenkragen hin weisende stirnseitige Ringfläche 21 der Dichtlippe 5 mit axialem Abstand radial übergreift. Dabei ist der lichte Innendurchmesser dieses Manschettenflansches 20 zumindest im wesentlichen gleich oder nur wenig kleiner als der lichte Innendurchmesser der axial auswärts weisenden Dichtlippe 5.

Erfirdungswesentlich ist der in Fig. 1 gezeigte Dichteinsatz durch einen dritten Wulstring 22 gekennzeichnet, der an der vor dem Einschieben des Spitzendes 16 axial einwärts weisenden Rückseite 23 der zweiten Dichtlippe 6 vor dem Einschieben des Spitzendes nach axial einwärts vorspringend derart am radial innenliegenden Randbereich 24 der zweiten Dichtlippe 6 angeformt ausgebildet ist, daß dieser dritte Wulstring 22 nach dem Einschieben des Spitzendes und nach dem Verschwenken des Doppellippenringes 2 den am Haltering 3 angeformten zweiten Wulstring 25 axial innen bündig hintergreift. Dabei ist dieser zweite Wulstring in der in Fig. 1 erkennbaren Weise nach einer Ausgestaltung der Erfindung in Form von zwei axial hintereinanderliegenden Wulstringen 25',25'' ausgebildet. Auf diese Weise kann der axial weiter auswärts liegende Teilabschnitt 25'' des zweiten Wulstringes ausschließlich nach den Erfordernissen des Zusammenwirkens mit dem ersten Wulstring 26 am Basisbereich 7 des Doppellippenringes 2 konturiert werden, ohne dabei übermäßig viel Material einsetzen zu müssen oder das Zusammenwirken zwischen dem axial weiter innen liegenden Abschnitt 25' des zweiten Dichtringes 25 mit dem dritten Dichtring 22 an der innenliegenden Dichtlippe 6 zu beeinträchtigen.

Nach einer Ausgestaltung der Erfindung ist dabei der Stützringabschnitt 8 des Dichteinsatzes 1 im Bereich des Fußabschnitts 13 derart mit einer sich nach axial einwärts erweiternden Konusinnenmantelfläche 27 ausgebildet, daß der innenliegende Dichtlippenring 6 über den Hintergriff durch den dritten Wulstring 22 auf dieser Konusfläche 27 auch hinter den Hauptabschnitt des Halteringes 3 weiter stabilisiert und fixiert wird.

Nach einer Ausgestaltung der Erfindung ist dabei in der aus Fig. 1 ersichtlichen Weise der dritte Wulstring 22 an seiner dichtlippenseitigen und in der Fläche der Rückseite der zweiten Dichtlippe 6 liegenden Basis im Schnurprofil breiter als hoch, um diesem dritten Wulstring nach dem Umschlagen durch das eingeführte Spitzende die erforderliche axiale Festigkeit und Steifigkeit zu verleihen. Überdies ist die von der Krone des Wulstringes 22 bis zur gegenüberliegenden Oberfläche der innenliegenden Dichtlippe 6, an dessen Rand dieser dritte Wulstring 22 ausgebildet ist, so bemessen, daß sie deutlich größer als der radiale Abstand zwischen dem Innenrand des zweiten Wulstringes 25' und der Außenwandfläche 28 des Spitzendes 16 ist. Ergänzend und unterstützend ist dabei am Fußabschnitt 13 des Stützringabschnitts 8 am axial inneren Ende der Verriegelungskonusfläche 27 außerdem ein Widerlager 29 ausgebildet, auf dem sich die Scheitelkrone 30 des dritten Wulstringes 22 bei eingeführtem Spitzende insbesondere im Bereich enger Dichtmuffenspalte ergänzend abstützt.

Insgesamt ist also die vor dem Einschieben des Spitzendes zumindest im wesentlichen nach radial einwärts ausgerichtete zweite Dichtlippe 6 nach dem Einschieben des Spitzendes und nach dem Umschlagen des Doppellippenringes 2 durch ein Fixieren dieser Dichtlippe 6 am zweiten Wulstring 25',25'' durch den ersten Wulstring 26 bündig und formschlüssig gegen einen nach axial einwärts gerichteten Zug am Doppellippenring und gegen einen nach axial außen gerichteten Zug oder einen vom Medium in den Rohrleitungen aufgebrachten Innendruck durch die Fixierung des dritten Wulstringes 22 am zweiten Wulstring 25' wirkt.

Statt der in Fig. 1 gezeigten Vergußtechnik kann der Haltering 3 des Dichteinsatzes auf seiner radial außenliegenden Wandung jedoch auch streng zylindrisch ausgebildet und beispielsweise durch Verkleben oder Verklemmen auf der Muffeninnenseite fixiert sein. In diesem Fall ist der dritte Wulstring 22 an der innenliegenden Dichtlippe 6 dann vorzugsweise so bemessen, daß sich seine Scheitelringkrone 30 axial innenliegend hinter dem axial inneren Ende des Halteringabschnitts 3 unmittelbar auf der Innenwandfläche der Muffe selbst als Widerlager abstützt.

## Patentansprüche

1. Dichteinsatz (1) aus gummielastischem Werkstoff für die Muffe einer ringgedichteten Rohrsteckverbindung zwischen einer Muffe (10) und einem Spitzende (16), insbesondere von Rohren aus mineralischen Werkstoffen, mit einem über einen ringförmigen Basisbereich (7) zu einem Doppellippenring (2) miteinander verbundenen ringförmigen Dichtlippenpaar (5,6), dessen erste Dichtlippe (5) vor dem Einschieben des Spitzendes (16) zumindest im wesentlichen axial zur Muffenöffnung zeigt und dessen zweite Dichtlippe (6) sich zumindest im wesentlichen radial einwärts erstreckt, mit einem am Basisbereich des Doppellippenringes angeformten manschettenartigen Haltering (3), der durch Verklemmen, Vergiessen oder Verkleben an der Innenwand (9) der Muffe (10) abgestützt ist, und mit einem flexiblen Anbindungsringabschnitt (4) zwischen dem Haltering (3) und dem Basisbereich (7) des Doppellippenringes (2) für ein Verschwenken des Dichtlippenpaares (5,6) in Dichtanlage gegen die Aussenwand (28) des Spitzendes (16), wobei zwischen dem Anbindungsringabschnitt und der vor dem Einschieben des Spitzendes axial einwärtsweisenden Rückseite (23) der zweiten Dichtlippe ein erster Wulstring (26) und in einem sich vom Anbindungsringabschnitt nach axial einwärts erstreckenden Stützringabschnitt (8) des Halteringes (3) ein nach radial innen vorspringender zweiter Wulstring (25) ausgebildet sind, und zwar dergestalt, dass nach dem Einschieben des Spitzendes und nach dem Verschwenken des Doppellippenringes der erste Wulstring (26) auf der radial innenliegenden Wandflzäche des Halteringes axial aussen vor dem zweiten Wulstring (25) liegt,
**gekennzeichnet** durch
einen dritten Wulstring (22), der an der vor dem Einschieben des Spitzendes axial einwärtsweisenden Rückseite (23) der zweiten Dichtlippe (6) nach axial einwärts vorspringend derart am radial innenliegenden Randbereich (26) der zweiten Dichtlippe angeformt ausgebildet ist, dass dieser dritte Wulstring (22) nach dem Einschieben des Spitzendes und nach dem Verschwenken des Doppellippenringes (2) den am Haltering angeformten zweiten Wulstring (25) axial innen bündig hintergreift.

2. Dichteinsatz nach Anspruch 1,
dadurch **gekennzeichnet,**
dass der zweite Wulstring (25) in Form von zwei axial hintereinanderliegenden Wulstringen (25',25'') oder in Form eines axial breiteren Ringsteges ausgebildet ist.

3. Dichteinsatz nach einem der Ansprüche 1 oder 2,.
dadurch **gekennzeichnet,**
dass der dritte Wulstring (22) nach dem Einschieben des Spitzendes (16) und nach dem Verschwenken des Doppellippenringes (2) auch den muffenspiegelseitigen Rand des Halteringes (3) hintergreift.

4. Dichteinsatz nach einem der Ansprüche 1 bis 3,
dadurch **gekennzeichnet,**
dass der dritte Wulstring (28) an seiner dichtlippenseitigen und in der Fläche der Rückseite (23) der zweiten Dichtlippe (6) liegenden Basis im Schnurprofil breiter als hoch ist.

5. Dichteinsatz nach einem der Ansprüche 1 bis 4,
dadurch **gekennzeichnet,**
dass die nach dem Einschieben des Spitzendes (16) und nach dem Verschwenken des Doppellippenringes (2) radiale Gesamthöhe des dritten Wulstringes (28) und der zweiten Dichtlippe (6) im Bereich des dritten Wulstringes mindestens um den Faktor 1,5, insbesondere mindestens um den Faktor 2 grösser ist als der radiale Abstand zwischen dem Innenrand des zweiten Wulstringes (25') und der Aussenwandfläche (28) des Spitzendes (16) bei koaxialer Ausrichtung des Spitzendes.

6. Dichteinsatz nach einem der Ansprüche 1 bis 5,
dadurch **gekennzeichnet,**
dass der dritte Wulstring (22) nach dem Einschieben des Spitzendes (16) und nach dem Verschwenken des Doppellippenringes (2) zusätzlich radial entweder auf einem an oder auf der Innenwand des Stützringabschnittes (8) des Halteringes (3) ausgebildeten Widerlager (29) oder unmittelbar auf der Muffeninnenwandfläche (9) abgestützt ist.

## Claims

1. An elastomeric insert seal (1) for the sleeve or muff or the like (10) of a ring-sealed push-in tube or pipe connection between a sleeve (10) and a male end (16), more particularly for tubes made of mineral substances, the insert seal (1) having: a pair (5, 6) of annular sealing lips interconnected by way of an annular base zone (7) to form a double-lipped ring (2), the first sealing lip (5) extending at least substantially axially to the sleeve opening before insertion of the male end (16) while the second sealing lip (6) extends at least substantially radially inwards; a dished retaining ring (3) which is formed on the base zone of the double-lipped ring (2) and which bears on the sleeve inside wall (9) by staking or caulking or sticking; and a flexible bridging ring (4) between the retaining ring (3) and the base zone (7) of the double-lipped ring (2), the flexible bridging ring (4) enabling the sealing lip pair (5, 6) to be pivoted into sealing engagement with the outer wall (28) of the male end (16), a first ring bead (26) being formed between the bridging part (4) and the back (23) of the second sealing lip, the back (23) extending axially inwards before insertion of the male end (16), while a second ring bead (25) which projects radially inwards is formed in a bearing part (8) of the retaining ring (3), the part (8) extending axially inwards from the bridging part (4), so that after the insertion of the male end (16) and after the pivoting of the double-lipped ring (2) the first ring bead (26) is disposed on the radially inwards wall surface of the retaining ring (3) axially outwardly before the second ring bead (25),
characterised by
a third ring bead (22) which is so formed in axially inwardly projecting manner on the radially inwards edge zone (26) of the second sealing lip (6) on the back (23) thereof, the back (23) extending radially inwards before insertion of the male end (16), as after insertion of the male end (16) and after the pivoting of the double-lipped ring (2) to engage axially inwardly flush behind the second ring bead (25).

2. An insert seal according to claim 1,
characterised in that
the second ring bead (25) is in the form of two axially consecutive ring beads (25', 25'') or in the form of an axially wider ring web.

3. An insert seal according to claim 1 or 2,
characterised in that
after insertion of the male end (16) and after pivoting of the ring (2) the third ring bead (22) also engages behind that edge of the retaining ring (3) which is near the sleeve surface.

4. An insert seal according to any of claims 1 to 3,
characterised in that
the third ring bead (28) is in sealing profile wider than it is high on its base which is disposed near the sealing lip and in the surface of the back (23) of the second sealing lip (6).

5. An insert seal according to any of claims 1 to 4,
characterised in that
after insertion of the male end (16) and after pivoting of the ring (2) the overall radial height of the third ring bead (28) and second sealing lip (6) near the third ring bead is greater by a factor of at least 1.5, more particularly by a factor of at least 2, than the radial gap between the inside edge of the second ring bead (25') and the outside wall surface (28) of the male end (16) when the same extends coaxially.

6. An insert seal according to any of claims 1 to 5,
characterised in that
after insertion of the male end (16) and after pivoting of the ring (2) the third ring bead (22) bears additionally radially either on an abutment (29) formed at or on the inner wall of the bearing part (8) of the retaining ring (3) or directly on the sleeve inside surface (9).

## Revendications

1. Insert d'étanchéité (1) en matériau élastique à base de caoutchouc pour le manchon d'un assemblage de tuyauteries à emboîtement avec bague d'étanchéité entre un manchon (10) et une extrémité pointue (16), en particulier pour des tuyaux en matériaux minéraux avec une paire de lèvres d'étanchéité (5, 6) de forme annulaire, assemblées l'une à l'autre pour former une bague à double lèvre (2) par l'intermédiaire d'une zone de base (7) de forme annulaire, dont la première lèvre d'étanchéité (5) est tournée avant l'insertion de l'extrémité pointue (16), au moins essentiellement en direction axiale vers l'ouverture du manchon et dont la deuxième lèvre d'étanchéité (6) s'étend au moins essentiellement en direction radiale vers l'intérieur, avec une bague de support (3) en forme de manchette formée dans la zone de base de la bague à double lèvre, ce manchon étant supporté par serrage, scellement ou collage sur la paroi intérieure (9) du manchon (10) et avec une section de bague d'assemblage flexible (4) entre la bague de support (3) et la zone de base (7) de la bague à double lèvre (2) pour permettre un rabattement de la paire de lèvres d'étanchéité (5, 6) en position d'étanchéité contre la paroi extérieure (28) de l'extrémité pointue (16) tandis que, entre la section de bague d'assemblage et la face postérieure (23) tournée axialement vers l'intérieur de la deuxième lèvre d'étanchéité avant l'insertion de l'extrémité pointue, il existe une première bague annulaire (26) et une deuxième bague annulaire (25) faisant saillie radialement vers l'intérieur, dans une section de bague d'appui (8) de la bague de support (3) s'étendant axialement vers l'intérieur, depuis la section de bague d'assemblage, et cela de façon que, après l'insertion des extrémités pointues et après le rabattement de la bague à double lèvre, la première bague à bourrelet (26) vienne appuyer sur la surface de la paroi radialement intérieure de la bague de support axialement vers l'extérieur, avant la première bague à bourrelet (25),
caractérisé par une troisième bague à bourrelet (22) qui est réalisée sur la face postérieure (23) de la deuxième lèvre d'étanchéité (6) tournée axialement vers l'intérieur avant l'insertion de l'extrémité pointue, en faisant saillie axialement vers l'intérieur, dans la zone périphérique intérieure (26) de la deuxième lèvre d'étanchéité, de façon que cette troisième bague à bourrelet (22) après l'insertion de l'extrémité pointue et après le rabattement de la bague à double lèvre (2), vienne s'emboîter étroitement et par derrière, intérieurement dans le sens axial avec la deuxième bague à bourrelet (25) formée sur la bague de maintien.

2. Insert d'étanchéité selon la revendication (1), caractérisé en ce que la deuxième bague à bourrelet (25) se présente sous la forme de deux bagues à bourrelet (25', 25") situées axialement l'une derrière l'autre ou sous forme d'une nervure annulaire plus large en direction axiale.

3. Insert d'étanchéité selon l'une des revendications 1 ou 2, caractérisé en ce que la troisième bague à bourrelet (22) vient s'emboîter également derrière le bord de la bague de support (3) du côté du miroir du manchon, après l'insertion de l'extrémité pointue (16) et après le pivotement de la bague à double lèvre (2).

4. Insert d'étanchéité selon l'une des revendications 1 à 3, caractérisé en ce que la troisième bague à bourrelet (28) a une base plus large que haute en profil et est située du côté de la lèvre d'étanchéité et dans la surface du côté postérieur (23) de la deuxième lèvre d'étanchéité (6).

5. Insert d'étanchéité selon l'une des revendications 1 à 4, caractérisé en ce que la hauteur radiale totale de la troisième bague à bourrelet (28) et de la deuxième lèvre d'étanchéité (6) dans la zone de la troisième bague à bourrelet et avant l'insertion de l'extrémité pointue (16) et après le pivotement de la bague à double lèvre (2), est au moins supérieure d'un facteur 1,5 et, en particulier, au moins d'un facteur 2, à la distance radiale entre le bord intérieur de la deuxième bague à bourrelet (25') et la surface de la paroi extérieure (28) de l'extrémité pointue (16), en cas d'orientation coaxiale de l'extrémité pointue.

6. Insert d'étanchéité selon l'une des revendications 1 à 5, caractérisé en ce que la troisième bague à bourrelet (22) prend appui, après l'insertion de l'extrémité pointue (16) et après le rabattement de la bague à double lèvre (2), en outre, radialement soit sur une butée (29) formée sur ou dans la paroi intérieure de la section de bague d'appui (8) de la bague de support (3) ou directement sur la surface de la paroi intérieure du manchon (9).
